# DEMANDE DE BREVET EUROPEEN

(11) **EP 4 685 364 A1**
(43) Date de publication de la demande: **28.01.2026**
(21) Numéro de dépôt: 25189538.9
(22) Date de dépôt: 15.07.2025
(51) Int. Cl.: F16H 3/083, B62M 25/08, F16H 37/06

(54) **DISPOSITIF DE CHANGEMENT DE VITESSE ET ENGIN DE MOBILITÉ ASSOCIÉ**

(30) Priorité: 25.07.2024 FR 2408267
(71) Demandeur: VALEO EMBRAYAGES, 80009 Amiens (FR)
(72) Inventeur: GUIDI, Martina, 12084 Mondovi (IT); CANTELLA, Andrea, 12084 Mondovi (IT); LOMUSCIO, Gianmarco, 12084 Mondovi (IT); CIMA, Massimo, 12084 Mondovi (IT); SPAGNOLO, Matteo, 12084 Mondovi (IT); AIRALDI, Alfio, 12084 Mondovi (IT)
(74) Mandataire: Valeo Powertrain Systems

(57) **Abrégé**

L'invention concerne un dispositif de changement de vitesse (20) pour engin de mobilité (1) comportant :
- un arbre de sélection (40) dans lequel sont disposées une navette (41) et une vis sans fin (21),
- trois pignons d'entrée (50, Fri) agencés pour tourner librement autour de l'arbre de sélection ( 40 ),
- trois pignons de sortie (60, Fi) solidaires en rotation d'un arbre creux (80)
- un actionneur de changement de vitesse (70) agencé pour déplacer la navette (41) le long de la vis sans fin (21) entre trois positions, et engager un rapport sélectionné,
le dispositif comportant au moins une série de trois cliquets disposés les uns à la suite des autres selon l'axe longitudinale (X2) de l'arbre de sélection (40), chaque cliquet (42) étant associé à un dispositif de soulèvement (43) permettant de soulever le cliquet via la navette (41), et à enclencher le rapport sélectionner via les pignons d'entrée et de sortie.

## Description

La présente invention concerne le domaine des dispositifs de changement de vitesses, et plus particulièrement un dispositif de changement de vitesse pour un engin de mobilité utilisant au moins une propulsion électrique, et par exemple un vélo à assistance électrique.

Lors du fonctionnement d'un engin de mobilité, une force motrice est transmise aux roues par l'intermédiaire d'un système de manivelle tournant autour d'un axe de pédalier qui entraîne la roue arrière généralement par une chaîne.

Il est déjà connu dans l'art antérieur des dispositifs de changement de vitesses pour engin de mobilité. Ces dispositifs de changement de vitesses comportent une boîte de vitesses dans laquelle une navette est configurée pour, lors de son déplacement, se positionner sous un pignon d'un rapport sélectionné, et enclencher ce rapport via un cliquet. Un tel dispositif nécessite de nombreuse pièces. Sa fabrication et sa maintenance sont complexes.

La présente invention a donc pour objet de pallier un ou plusieurs des inconvénients des dispositifs de l'art antérieur en proposant un ensemble de transmission, pour engin de mobilité, simplifié.

Pour cela la présente invention propose un dispositif de changement de vitesse pour engin de mobilité comportant :
- un arbre de sélection dans lequel sont disposées une navette et une vis sans fin,
- trois pignons d'entrée agencés pour tourner librement autour de l'arbre de sélection,
- trois pignons de sortie solidaires en rotation d'un arbre creux
- un actionneur de changement de vitesse agencé pour déplacer la navette le long de la vis sans fin entre trois positions, et engager un rapport sélectionné,
le dispositif comportant au moins une série de trois cliquets disposés les uns à la suite des autres selon l'axe longitudinale de l'arbre de sélection, chaque cliquet étant associé à un dispositif de soulèvement permettant de soulever le cliquet via la navette, et à enclencher le rapport sélectionner via les pignons d'entrée et de sortie.

Un tel nombre de cliquets permet une optimisation de l'engin.

Selon un mode de réalisation de l'invention, le dispositif de changement de vitesse comporte deux séries de trois cliquets disposés les uns à la suite des autres selon l'axe longitudinale de l'arbre de sélection.

Selon un mode de réalisation de l'invention, les séries de cliquets sont disposées à 180 degrés l'une de l'autre autour de l'arbre de sélection.

Selon un mode de réalisation de l'invention, le dispositif comporte un système de blocage radiale, formé d'une seule pièce, pour maintenir l'ensemble des cliquets, en place sur l'arbre de sélection.

Selon un mode de réalisation de l'invention, le système de blocage est formé d'une partie plane longitudinale à partir de laquelle s'étendent trois languettes, chacune des languettes étant positionnées au-dessus d'un des cliquets.

Selon un mode de réalisation de l'invention, le dispositif comporte trois pignons d'entrée et de sortie, trois cliquets et trois languettes.

Selon un mode de réalisation de l'invention, le système de blocage radiale comporte une languette de positionnement.

L'invention concerne également un engin de mobilité, notamment engin de mobilité à assistance électrique, comportant un dispositif de changement de vitesse selon l'invention. Selon un mode de réalisation de l'invention, l'engin est un vélo à assistance électrique D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la [Fig. 1] est une vue d'un engin de mobilité selon un des aspects de l'invention,
- la [Fig. 2] illustre l'ensemble de transmission de l'engin de mobilité de la Figure 1,
- la [Fig. 3] illustre une vue en coupe d'une partie de l'ensemble de transmission selon un mode de réalisation de l'invention,
- la [Fig. 4] illustre une vue en coupe d'une autre partie de l'ensemble de transmission selon un mode de réalisation de l'invention,
- la [Fig. 5] est une vue en élévation du système de cliquets selon l'invention,
- la [Fig. 6] est une vue en coupe d'un système de cliquets selon l'invention,
- la [Fig. 7] est une vue en élévation du système de fermeture du logement du dispositif de changement de vitesse selon l'invention selon un autre mode de réalisation de l'invention,
- la [Fig. 8] est une vue en coupe d'une partie de 'arbre de sortie.

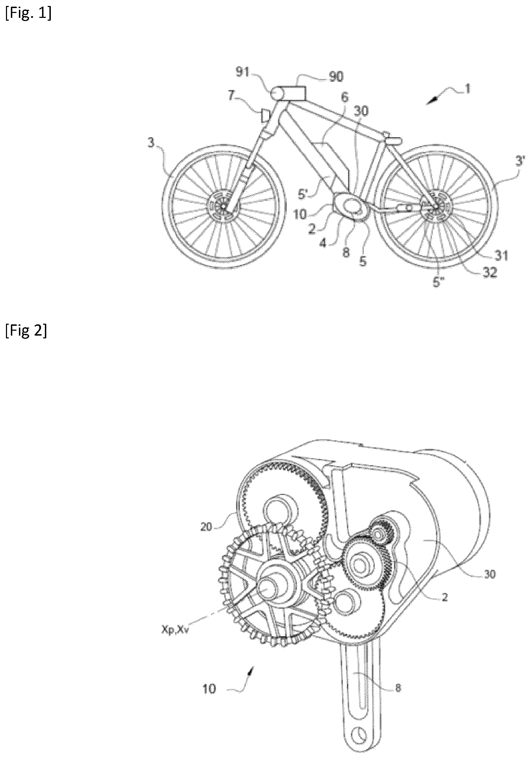

La [Fig. 1] illustre un engin de mobilité 1 selon un des aspects de l'invention. L'engin 1 est ici un vélo à assistance électrique comportant un moteur électrique 2. Le moteur électrique 2 est agencé pour assurer une partie de la propulsion de l'engin.

Le vélo comporte au moins deux roues 3, 3 ' auxquelles est fournie une force motrice, par l'intermédiaire de deux pédales tournant autour d'un axe de pédalier d'axe Xp [Fig. 2] qui entraîne la roue arrière par exemple par une chaîne, ou tout autre moyen de transmission lors de son utilisation.

L'engin 1 comporte également une unité de pilotage 4 ainsi que plusieurs capteurs 5, 5', 5", situés par exemple au niveau du pédalier, sur le cadre du vélo ou au niveau d'une roue 3, 3'. L'engin 1 ici représenté comporte également un dispositif de stockage d'énergie sous forme d'une batterie 6, un système d'éclairage 7, un pédalier 8 d'axe Xp [Fig. 2], un système de localisation et/ou navigation 90 ainsi qu'un système interface homme-machine 91 comportant notamment un écran tactile apte à afficher des informations pour et/ou prendre en compte les demandes dudit utilisateur. Le système interface homme-machine 91 est en particulier relié au système de localisation 90 et sert d'interface de navigation. L'invention n'est pas limitée à un système interface homme-machine particulier, et peut comporter tout système connu de l'homme du métier.

Les roues 3, 3' sont munies d'un système de freinage 31, comportant notamment des freins à disque 32.

L'engin 1 comporte un ensemble de transmission 10 illustré [Fig. 2]. L'ensemble de transmission 10 comporte un dispositif de changement de vitesse 20 automatique selon l'invention et le moteur électrique 2 pour fournir une partie de la puissance pour la propulsion de l'engin 1.

Selon une première variante de l'invention, l'engin comporte 3 vitesses.

Selon un mode de réalisation de l'invention, l'ensemble de transmission 10 est au moins en partie logé dans un boîtier 30 ici positionné au niveau du pédalier 8 dont l'axe Xp est confondu avec l'axe de sortie Xᵥ du dispositif de changement de vitesse 20.

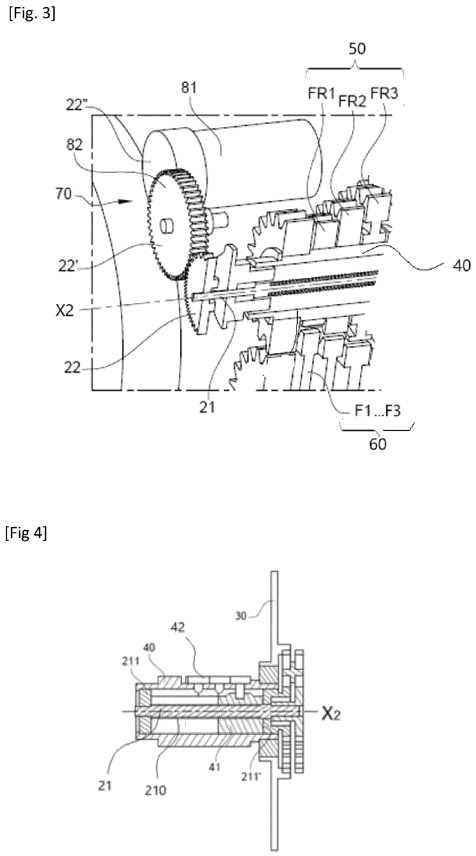

Dans le cadre de l'invention, le dispositif de changement de vitesse 20 illustré [Fig. 2] à [Fig. 4] comporte trois rapports.

Selon un mode de réalisation de l'invention, le dispositif de changement de vitesse 20 illustré [Fig. 3] et [Fig. 4] comporte 3 rapports distribués entre un premier rapport dit rapport n°1 et un rapport supérieur dit rapport n°3.

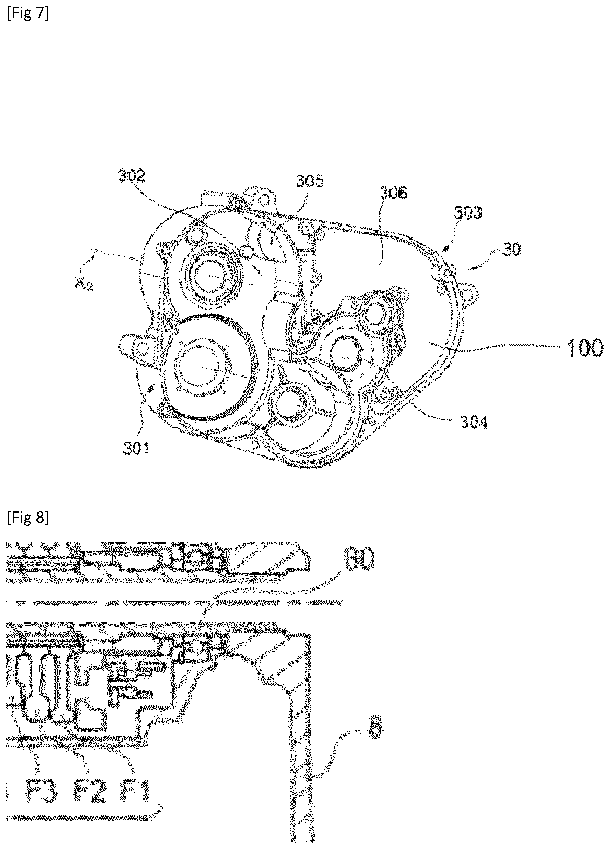

Selon un mode de réalisation de cette première variante, le dispositif de changement de vitesse 20 comporte une série 60 de trois pignons de sortie d'axe X_{,} de référence F₁ à F₃, solidaires en rotation d'un arbre creux 80 [Fig. 8] et une série 50 de trois pignons d'entrée d'axe X_{,} de référence FR₁ à FR₃, agencés pour tourner librement autour de l'arbre de sélection 40.

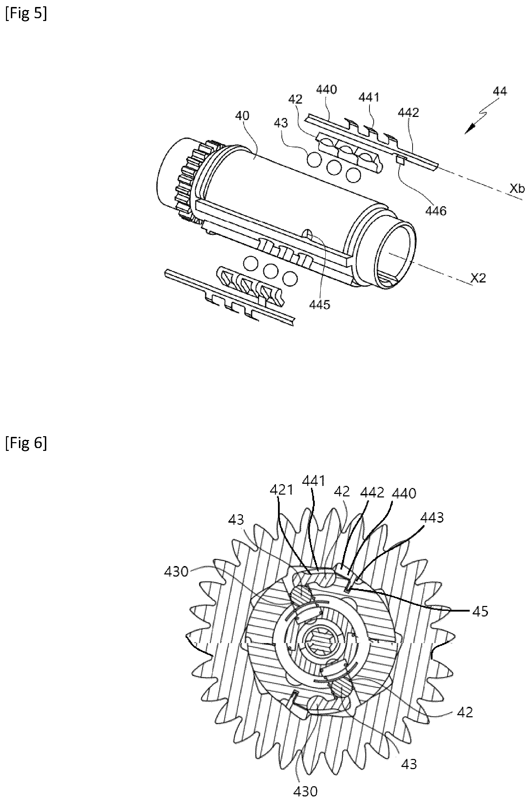

Selon un mode de réalisation de l'invention, l'arbre de sélection 40 illustré [Fig. 3] à [Fig. 6] loge une navette 41 entourant une vis sans fin 21 du dispositif de changement de vitesse 20. L'engin 1 selon l'invention, comporte un actionneur de changement de vitesse 70 agencé pour déplacer la navette 41 le long de la vis sans fin 21 par une liaison cinématique hélicoïdale, entre 3 positions de P₁ à P₃ et engager un rapport sélectionné.

Selon un mode de réalisation de l'invention, l'actionneur de changement de vitesse 70 comporte des moyens électriques de déplacement de la navette 41, sous forme d'un motoréducteur. Celui-ci comporte un moteur 81 et un réducteur 82.

Selon un mode de réalisation de l'invention, le motoréducteur comporte également un pignon 22 sur l'axe de la vis sans fin 21, un pignon 22' intermédiaire et un pignon 22‴ sur l'axe Xm du moteur 81. Les dentures des pignon 22, 22', 22" peuvent être droites comme illustré ou hélicoïdales dans une variante non illustrée.

Le guidage en rotation de la vis sans fin 21 est par exemple assuré à l'aide de roulements à chacune de ses extrémités.

Selon un mode de réalisation de l'invention, la navette 41 est configurée pour, lors de son déplacement, se positionner sous le pignon du rapport sélectionné, et enclencher ce rapport. Selon un mode de réalisation de l'invention, le dispositif de changement de vitesse 20 comporte une série de trois cliquets disposés les uns à la suite des autres selon l'axe longitudinale X2 de l'arbre de sélection 40.

Selon un mode de réalisation de l'invention, le dispositif de changement de vitesse 20 comporte au moins une série de trois cliquets disposés les uns à la suite des autres selon l'axe longitudinale X2 de l'arbre de sélection 40.

Selon un mode de réalisation de l'invention, le dispositif de changement de vitesse 20 comporte deux séries de trois cliquets disposés les uns à la suite des autres selon l'axe longitudinale X2 de l'arbre de sélection 40.

Selon un mode de réalisation de l'invention, les séries sont disposées à 180 degrés l'une de l'autre autour de l'arbre de sélection 40. Cela limite le nombre de pièces par rapport à l'art antérieur. Les cliquets 42 ont une forme configurée pour coopérer avec les pignons d'entrée Fri. Les cliquets 42 sont disposés dans des évidements 420 formés sur l'arbre de sélection 40. Chaque cliquet 42 est associé à un dispositif de soulèvement, et par exemple une bille 43, visible [Fig. 5] et [Fig. 6] disposée dans un perçage 430 de l'arbre intérieur, dépassant à l'intérieur de l'arbre intérieur, placée sous chaque cliquet 42 de façon à pouvoir le soulever via la navette 41.

Ainsi, lors d'un changement de rapport de vitesse la vis sans fin 21 est entrainée en rotation par l'actionneur de changement de vitesse 70 provoquant le mouvement axial de l'écrou 210 de la vis 21 qui entraine la navette 41, la navette 41 est positionnée sous le pignon d'entrée Frᵢ correspondant au rapport i sélectionné, qui est alors bloqué en rotation par un des cliquets 42, et engrène avec le pignon correspondant de sortie.

Dans le cadre de l'invention, pour maintenir les cliquets 42 en place dans leur logement, le système de changement de vitesse comporte au moins un système de blocage radiale 44 formé d'une seule pièce. C'est-à-dire un système 44 qui maintient les cliquets 42 plaqués dans leur logement, tout en leur permettant de se soulever via la bille 43 et la navette 41. Le système de blocage radiale 44 est formé d'une seule pièce. Cela facilite son montage, sa fabrication et limite les couts.

Selon un mode de réalisation de l'invention, le système de blocage 44 comporte une partie plane longitudinale 440.

Selon un mode de réalisation de l'invention, le système 44 comporte trois languettes 441 dans le cas d'un engin à trois vitesses.

Selon un mode de réalisation de l'invention, les languettes 441 sont formées à partir d'un premier bord 442, parallèle à l'axe Xb du système de blocage 44, de la partie plane 440 et orientées perpendiculairement par rapport à l'axe Xb du système de blocage 44. Le système de blocage 44 en rotation forme ainsi un peigne aux dents aplaties et écartées.

Selon un mode de réalisation de l'invention, la partie plane 440 est insérée, via un deuxième bord 443 opposé à celui 442 où sont situées les languettes 441, dans une rainure 45 longitudinale, et parallèle à l'axe de l'arbre, formée dans l'arbre de sélection 40.

Selon un mode de réalisation de l'invention, ce deuxième bord 443 est replié en direction de l'arbre 40 pour s'insérer dans la rainure 45.

Le système de blocage 44 est disposé sur l'arbre de sélection 40 de façon à ce que chaque languette 441 soit positionnée sur un cliquet 42.

Selon un mode de réalisation de l'invention, chaque cliquet 42 comporte un évidement 421 dont la forme est complémentaire à celle de la languette 441 de façon à ce que la languette 441 soit logée dans l'évidement 421, et ne bouge pas lors du blocage du cliquet.

Selon un mode de réalisation de l'invention, le dispositif de blocage 44 en rotation comporte une languette de positionnement 446. Cette languette de positionnement 446 est disposée sur le deuxième bord 443 inséré dans la rainure 45. Cette languette 446 coopère avec un logement supplémentaire 445 de forme complémentaire à celle de la languette de positionnement 446 formé dans l'arbre de sélection 40. Cette languette de positionnement 446 permet aux languettes 441 du dispositif d'être centrées au-dessus des cliquets 42.

Le système de blocage 44 en rotation exerce ainsi sur chaque cliquet 42 une pression, ou force de plaquage, suffisante pour bloquer le cliquet 42 dans le logement 421 tout en lui permettant d'être soulevé par la navette 41.

Selon un mode de réalisation de l'invention, le système de changement de vitesse comporte au moins deux systèmes de blocage 44 en rotation disposés de façon à bloquer deux séries de cliquets.

Ainsi lors du fonctionnement de l'engin de mobilité, La navette 41 permet de sélectionner le rapport choisi qui va enclencher un pignon d'entrée Fri via un cliquet 42 et être bloqué en rotation grâce au système de blocage en rotation 44.

Le pignon d'entrée Fri engrène ensuite avec un pignon de sortie Fi.

Si l'engin 1 roule dans un rapport i, sans en changer, la vis sans fin 21 ne tourne pas.

Lors d'un changement de rapport de vitesse la vis sans fin 21 est entrainée en rotation par l'actionneur de changement de vitesse 70 provoquant le mouvement axial de l'écrou 210 de la vis 21 qui entraine la navette 41 et permet ainsi le passage de rapport. Grâce à la liaison pivot ainsi réalisée le mouvement de rotation de la vis sans fin 21 est transformé en mouvement de translation de la navette 41.

Selon un mode de réalisation de l'invention, une butée 211, 211' limite à chaque extrémité le déplacement de la navette 41. Selon un autre mode de réalisation de l'invention, le déplacement de la navette est contrôlé par un capteur de position.

Selon un mode de réalisation non illustré, la navette 41 est apte à prendre une position dite position neutre P0 pour laquelle aucun rapport de vitesse n'est engagé.

L'ensemble est disposé dans un boitier illustré [Fig. 7] selon une première face 100.

Le boitier 30 comporte un carter 301 délimitant un premier logement 302 agencé pour loger les engrenages du dispositif de changement de vitesse 20. Le carter 301 délimite également plusieurs deuxièmes logements, distincts les uns des autres. Les logements 303, 304, 305, et 306 sont agencés pour loger respectivement le moteur électrique 2, le réducteur 82, l'actionneur de changement de vitesse 70 et l'unité de pilotage 4 de l'engin de mobilité. Les deuxièmes logements sont de préférence étanches, en particulier celui agencé pour contenir l'unité de pilotage 4. Cette première face 100 est fermée par un système de fermeture de type capot ou couvercle.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Dispositif de changement de vitesse (20) pour engin de mobilité (1) comportant :
- un arbre de sélection (40) dans lequel sont disposées une navette (41) et une vis sans fin (21),
- trois pignons d'entrée (50, Fri) agencés pour tourner librement autour de l'arbre de sélection ( 40 ),
- trois pignons de sortie (60, Fi) solidaires en rotation d'un arbre creux (80)
- un actionneur de changement de vitesse (70) agencé pour déplacer la navette (41) le long de la vis sans fin (21) entre trois positions, et engager un rapport sélectionné,
**caractérisé en ce qu'**il comporte au moins une série de trois cliquets disposés les uns à la suite des autres selon l'axe longitudinale (X2) de l'arbre de sélection (40), chaque cliquet (42) étant associé à un dispositif de soulèvement (43) permettant de soulever le cliquet via la navette (41), et à enclencher le rapport sélectionner via les pignons d'entrée et de sortie.

2. Dispositif de changement de vitesse (20) selon la revendication 1, le dispositif de changement de vitesse 20 comporte deux séries de trois cliquets disposés les uns à la suite des autres selon l'axe longitudinale X2 de l'arbre de sélection 40.

3. Dispositif de changement de vitesse (20) selon la revendication 2, dans lequel les séries de cliquets sont disposées à 180 degrés l'une de l'autre autour de l'arbre de sélection (40)

4. Dispositif de changement de vitesse (20) selon une des revendications 1 à 3, comportant un système de blocage radiale (44), formé d'une seule pièce, pour maintenir l'ensemble des cliquets (42) en place sur l'arbre de sélection (40).

5. Dispositif de changement de vitesse (20) selon la revendication 4, dans lequel le système de blocage (44) est formé d'une partie plane longitudinale (440) à partir de laquelle s'étendent trois languettes (441), chacune des languettes (441) étant positionnées au-dessus d'un des cliquet (42).

6. Dispositif de changement de vitesse (20) selon une des revendication 1 à 5, comportant trois pignons d'entrée (50) et de sortie (70), trois cliquets (42) et trois languettes (441).

7. Dispositif de changement de vitesse (20) selon une des revendication 1 à 6, dans lequel le système de blocage radiale (44) comporte une languette de positionnement (446).

8. Engin de mobilité (1), notamment engin de mobilité à assistance électrique, comportant un dispositif de changement de vitesse (20) selon l'une quelconque des revendications précédentes.

9. Engin de mobilité selon la revendication 8, dans lequel l'engin (1) est un vélo à assistance électrique.
